# EUROPÄISCHE PATENTSCHRIFT

(11) **EP 4 041 994 B1**
(45) Veröffentlichungstag und Bekanntmachung des Hinweises auf die Patenterteilung: **14.08.2024**
(21) Anmeldenummer: 20765235.5
(22) Anmeldetag: 27.08.2020
(51) Int. Cl.: F01D 25/16, F02C 6/12, F04D 29/051

(54) **STRÖMUNGSMASCHINE ZUR LUFTVERSORGUNG EINES BRENNSTOFFZELLENSYSTEMS, VERFAHREN ZUM BETREIBEN EINER SOLCHEN STRÖMUNGSMASCHINE**
FLOW MACHINE FOR SUPPLYING AIR TO A FUEL CELL SYSTEM, METHOD OF OPERATING SUCH A FLOW MACHINE
MACHINE À FLUX POUR L'ALIMENTATION EN AIR D'UN SYSTÈME DE PILES À COMBUSTIBLE, PROCÉDÉ DE FONCTIONNEMENT D'UNE TELLE MACHINE À FLUX

(30) Priorität: 07.10.2019 DE 102019215337
(43) Veröffentlichungstag der Anmeldung: 17.08.2022
(73) Patentinhaber: Robert Bosch GmbH, 70442 Stuttgart (DE)
(72) Erfinder: KNOOP, Andreas, 73728 Esslingen (DE)
(86) Internationale Anmeldenummer: PCT/EP2020/073980
(87) Internationale Veröffentlichungsnummer: WO 2021/069143

(56) Entgegenhaltungen:
- WO-A1-2008/086826
- DE-A1- 102014 018 096
- DE-A1- 102015 007 379
- DE-A1- 102017 216 763

## Beschreibung

Die Erfindung betrifft eine Strömungsmaschine mit den Merkmalen des Oberbegriffs des Anspruchs 1. Die Strömungsmaschine kann insbesondere zur Luftversorgung von Brennstoffzellensystemen eingesetzt werden. Darüber hinaus betrifft die Erfindung ein Verfahren zum Betreiben einer derartigen Strömungsmaschine.

### Stand der Technik

Brennstoffzellensysteme benötigen Sauerstoff, der in einer Brennstoffzelle des Systems mit Wasserstoff zu Wasser bzw. Wasserdampf reagiert. Auf diese Weise wird durch elektrochemische Wandlung eine elektrische Leistung erzeugt, die als Antriebsenergie, beispielsweise zum Antrieb eines Fahrzeugs, genutzt werden kann. Als Sauerstoffquelle dient üblicherweise Umgebungsluft, die der Brennstoffzelle mittels eines Luftverdichtungssystems zugeführt wird, da der Prozess einen bestimmten Luftmassenstrom und ein bestimmtes Druckniveau erfordert. Das Luftverdichtungssystem umfasst eine hochdrehende Strömungsmaschine mit mindestens einem auf einer Welle angeordneten Verdichterrad, das elektromotorisch angetrieben wird. Zur Energierückgewinnung kann auf der Welle ein Turbinenrad angeordnet sein, der Brennstoffzellenabluft zugeführt wird. In diesem Fall handelt es sich bei der Strömungsmaschine um einen Abgasturbolader mit einem zusätzlichen Elektromotor.

Die maximale Drehzahl des zusätzlichen Elektromotors ist aus regelungstechnischen und Festigkeitsgründen beschränkt, beispielsweise auf ein Maximum zwischen 100.000 und 125.000 1/min. Abgasturbolader ohne zusätzlichen Elektromotorerreichen Drehzahlen zwischen 180.000 und 250.000 1/min. Der erreichbare Verdichterauslassdruck bei einer Strömungsmaschine ist proportional zum Quadrat der Umfangsgeschwindigkeit am Außendurchmesser des Verdichterrads. Das heißt, dass er durch die Drehzahl und den Außendurchmesser des Verdichterrads bestimmt wird. Aufgrund der für das Brennstoffzellensystem notwenigen Drücke ergeben sich in Verbindung mit der genannten Drehzahlbeschränkung Verdichterräder mit vergleichsweise großen Außendurchmessern. Diese erzeugen große Axialkräfte in Richtung des Verdichtereinlasses, da sich im Betrieb der am Verdichterauslass herrschende Druck auf den Radrücken des Verdichterrads aufprägt. Die hohen Axialkräfte wiederum erfordern entsprechend große Axiallager. Mit der Größe der Axiallager steigt jedoch die Verlustleistung, wobei die Axiallager einen deutlich größeren Anteil (2/3-Anteil) an den Gesamtlagerverlusten als die Radiallager (1/3-Anteil) haben.

Strömungsmaschinen, die der Luftversorgung von Brennstoffzellensysteme dienen, weisen in der Regel Folienluftlager auf, um das System ölfrei zu halten. Folienluftlager erzeugen jedoch Luftreibungsverluste und werden daher mit Hilfe von zusätzlicher Luft gekühlt. Hierzu werden üblicherweise etwa 5 bis 10 % der verdichteten Luft für die Kühlung abgezweigt. Diese abgezweigte Luftmenge steht anschließend für den Prozess in der Brennstoffzelle nicht mehr zur Verfügung und setzt somit den Wirkungsgrad der Strömungsmaschine herab. Damit die abgezweigte Luft überhaupt Kühlleistung erbringen kann, wird sie zuvor selber gekühlt. In der Regel wird hierzu die Kühlluft hinter einem Ladeluftkühler des Brennstoffzellensystems abgezweigt. Der zusätzliche Kühlbedarf muss bei der Auslegung des Ladeluftkühlers berücksichtigt werden. Zudem muss eine zusätzliche Leitung vorgesehen werden, mittels welches die Kühlluft der Strömungsmaschine zugeführt werden kann.

Strömungsmaschinen für Energiewandler, insbesondere für Brennstoffzellen, mit einem Verdichter zum Verdichten von dem Energiewandler zuzuführender Luft werden in den Dokumenten DE 10 2015 007 379 A1 und DE 10 2014 018 096 A1 beschrieben.

Ausgehend von dem vorstehend genannten Stand der Technik liegt der vorliegenden Erfindung die Aufgabe zugrunde, den Wirkungsgrad einer Strömungsmaschine zur Luftversorgung eines Brennstoffzellensystems zu verbessern.

Zur Lösung der Aufgabe werden die Strömungsmaschine mit den Merkmalen des Anspruchs 1 sowie das Verfahren mit den Merkmalen des Anspruchs 9 vorgeschlagen. Vorteilhafte Weiterbildungen der Erfindung sind den jeweiligen Unteransprüchen zu entnehmen.

### Offenbarung der Erfindung

Die zur Luftversorgung eines Brennstoffzellensystems vorgeschlagene Strömungsmaschine umfasst mindestens ein mit einer Welle drehfest verbundenes Verdichterrad sowie einen Elektromotor zum Antreiben der Welle, wobei das Verdichterrad über einen Nabenabschnitt mit einem vorzugsweise hohlzylinderförmigen Wellenabschnitt der Welle drehfest verbunden ist. Erfindungsgemäß ist im Nabenabschnitt mindestens ein Luftkanal ausgebildet, über den ein Verdichtereinlass mit einem Ringraum auf der dem Verdichtereinlass abgewandten Seite des Verdichterrads verbunden ist, so dass auf beiden Seiten des Verdichterrads im Wesentlichen der gleiche Luftdruck anliegt. Folglich wirken auf das Verdichterrad Axialkräfte, die sich vollständig oder nahezu vollständig gegeneinander aufheben. Das heißt, dass ein Axialkraftausgleich bewirkt wird. Dies wiederum hat zur Folge, dass die Verlustleistung in den Axiallagern verringert werden kann. Ferner verringert sich der Kühlluftbedarf in den Lagern. Beides führt im Ergebnis zu einer Wirkungsgradsteigerung. Darüber hinaus erhöht sich die Robustheit der Strömungsmaschine gegenüber äußeren Beschleunigungen, beispielsweise bei einer Schlechtweg-Fahrt, sofern die Strömungsmaschine in einem Fahrzeug zum Einsatz gelangt.

Der Ringraum auf der dem Verdichtereinlass abgewandten Seite des Verdichterrads ist über mindestens einen weiteren Luftkanal mit mindestens einem Lager der Welle verbunden. Die über den mindestens einen weiteren Luftkanal zugeführte Luft kann zur Kühlung des mindestens einen Lagers eingesetzt werden. Der mindestens eine weitere Luftkanal zur Anbindung mindestens eines Wellenlagers an den Ringraum und damit an die Verdichtereinlassseite ist ferner über einen Ringspalt zwischen der Welle und einer die Welle umgebenden Wicklung des Elektromotors geführt. Dadurch kann die über den mindestens einen weiteren Luftkanal zugeführte Luft zur Kühlung des Elektromotors genutzt werden.

Bevorzugt weist der Nabenabschnitt mindestens einen axial verlaufenden Luftkanal auf. Das heißt, dass der mindestens eine Luftkanal parallel zu einer Längsachse der Welle verläuft. Der Luftkanal kann beispielsweise als Axialbohrung ausgeführt sein. Sofern nur ein axial verlaufender Luftkanal vorgesehen ist, ist dieser bevorzugt zentral bzw. koaxial zur Längsachse der Welle angeordnet. Der mindestens eine axial verlaufende Luftkanal steht vorzugsweise in direkter Verbindung mit der Verdichtereinlassseite, so dass ein Teilstrom der dem Verdichterrad zugeführten Luft über den mindestens einen axial verlaufenden Luftkanal abgezweigt und auf die Rückseite des Verdichterrads geführt wird.

Des Weiteren bevorzugt weist der Nabenabschnitt mindestens einen im Wesentlichen radial verlaufenden Luftkanal auf. Über den mindestens einen im Wesentlichen radial verlaufenden Luftkanal kann eine Verbindung des mindestens einen axial verlaufenden Luftkanals mit dem Ringraum auf der Rückseite des Verdichterrads hergestellt werden. Der im Wesentlichen radial verlaufende Luftkanal kann beispielsweise durch eine Radialbohrung im Nabenabschnitt ausgebildet werden. Bevorzugt weist der Nabenabschnitt mehrere im Wesentlichen radial verlaufende Luftkanäle auf, die im gleichen Winkelabstand zueinander angeordnet sind. Die hinter das Verdichterrad geführte Luft wird somit gleichmäßig im Ringraum verteilt.

Vorteilhafterweise ist der Nabenabschnitt zumindest abschnittsweise in den hohlzylinderförmigen Wellenabschnitt eingesetzt, insbesondere eingepresst. Das Ineinandergreifen der Abschnitte erhöht die Steifigkeit und damit die Stabilität des Verbunds.

Ferner wird vorgeschlagen, dass der hohlzylinderförmige Wellenabschnitt mindestens einen im Wesentlichen radial verlaufenden Luftkanal aufweist, der in Überdeckung mit dem mindestens einen radial verlaufenden Luftkanal des Nabenabschnitts angeordnet ist. Der mindestens eine im Wesentlichen radial verlaufende Luftkanal des Nabenabschnitts kann demnach in einem Bereich angeordnet sein, der in den hohlzylinderförmigen Wellenabschnitt eingesetzt, insbesondere eingepresst ist. Auf diese Weise wird eine in axialer Richtung kompakt bauende Strömungsmaschine geschaffen.

Vorzugsweise ist das mindestens eine Lager als Folienluftlager ausgeführt, so dass die Ölfreiheit des Systems gewährleistet ist.

Ergänzend wird vorgeschlagen, dass der mindestens eine weitere Luftkanal durch eine drehfest mit der Welle verbundene, innenbelüftete Axiallagerscheibe zur Lagerung eines Turbinenrads geführt ist. Neben einer Kühlung des Axiallagers kann somit zugleich ein Druckhub erzielt werden. Denn mit Hilfe der innenbelüfteten Axiallagerscheibe kann der Luftdruck der über den mindestens einen weiteren Luftkanal zugeführten Luft auf das Niveau vor dem Turbinenrad angehoben werden.

Über den Verdichtereinlass wird Luft aus der Umgebung angesaugt. Die angesaugte Luft hat somit Umgebungstemperatur und damit ein sehr niedriges Temperaturniveau. Damit kann die Rotor- und Lagerkühlfunktion in der Regel bereitsoptimal erfüllt werden.

Bei Bedarf kann den Luftkanälen aber auch gekühlte Umgebungsluft zugeführt werden, das heißt Luft, die vorab selbst gekühlt wurde. Gemäß einer bevorzugten Ausführungsform der Erfindung sind daher sämtliche Luftkanäle, welche den Verdichtereinlass mit dem rückwärtigen Ringraum und ggf. mindestens einem Wellenlager verbinden, mit gekühlter oder ungekühlter Umgebungsluft beaufschlagbar.

Über die innenbelüftete Axiallagerscheibe kann der Luftdruck der gekühlten oder ungekühlten Umgebungsluft auf das Niveau vor dem Turbinenrad angehoben werden, so dass zumindest ein Teil der für die Kühlluftförderung erforderlichen Energie mit Hilfe der Turbine zurückgewonnen wird.

Eine Abwandlung besteht darin, auf den Druckhub durch die innenbelüftete Axiallagerscheibe zu verzichten und die Umgebungsluft hinter dem Turbinenauslass in das System zurückzuführen.

Zur Lösung der eingangs genannten Aufgabe wird darüber hinaus ein Verfahren zum Betreiben einer erfindungsgemäßen Strömungsmaschine vorgeschlagen. Bei dem Verfahren werden zumindest die Luftkanäle, welche den Verdichtereinlass mit dem rückwärtigen Ringraum verbinden, mit gekühlter oder ungekühlter Umgebungsluft beaufschlagt. Vorteilhafterweise ist der Ringraum über mindestens einen weiteren Luftkanal mit mindestens einem Lager verbunden, so dass die Umgebungsluft dem mindestens einen Lager zugeführt wird. Auf diese Weise kann das mindestens eine Lager mit Hilfe der Umgebungsluft gekühlt werden.

Des Weiteren wird vorgeschlagen, dass bei der Durchführung des Verfahrens mit Hilfe einer innenbelüfteten Axiallagerscheibe, durch die mindestens ein Luftkanal geführt ist, der Kühlluftdruck angehoben wird. Auf diese Weise kann zumindest ein Teil der für die Förderung der Umgebungsluft erforderlichen Energie zurückgewonnen werden.

Die Erfindung wird nachfolgend anhand der beiliegenden Zeichnungen näher erläutert. Diese zeigen:
Fig. 1 einen schematischen Längsschnitt durch eine erfindungsgemäße Strömungsmaschine und
Fig. 2 einen schematischen Längsschnitt durch die Strömungsmaschine der Fig. 1 mit einer Darstellung der Luftführung.

### Ausführliche Beschreibung der Zeichnungen

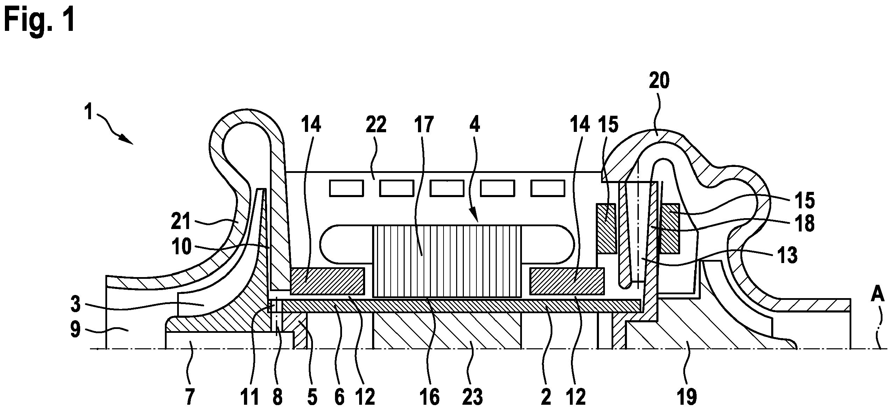

Die in der Fig. 1 dargestellte Strömungsmaschine 1 umfasst eine Welle 2, in der einenends ein Verdichterrad 3 und andernends ein Turbinenrad 19 angeordnet ist. Die Welle 2 wird mit Hilfe eines Elektromotors 4 in einer Drehbewegung um ihre Längsachse A angetrieben. Der Elektromotor 4 umfasst hierzu eine um die Welle 2 herum angeordnete Wicklung 17 und einen in der Welle 2 aufgenommenen Permanentmagneten 23. Damit die Welle 2 eine Drehbewegung ausführen kann, ist sie über zwei Radiallager 14 drehbar gelagert. Ferner sind zwei Axiallager 15 im Bereich einer mit der Welle 2 verbundenen Axiallagerscheibe 18 vorgesehen. Die Lager 14, 15 sind in ein Motorgehäuse 22 des Elektromotors 4 integriert. Das Verdichterrad 3 ist von einem Verdichtergehäuse 21 und das Turbinenrad 19 ist von einem Turbinengehäuse 20 umgeben.

Im Betrieb der Strömungsmaschine 1 wird das Verdichterrad 3 über einen Verdichtereinlass 9 von Luft angeströmt. Um die dabei auf das Verdichterrad 3 wirkenden Axialkräfte zu minimieren, weist das Verdichterrad 3 der dargestellten Strömungsmaschine 1 in einem Nabenabschnitt 5, der in einen hohlzylinderförmigen Wellenabschnitt 6 eingesetzt ist, mehrere Luftkanäle 7, 8 auf. Die Luftkanäle 7, 8 verbinden den Verdichtereinlass 9 mit einem Ringraum 10 auf der dem Verdichtereinlass 9 abgewandten Seite des Verdichterrads 3. Somit wird ein

Teilstrom der Luft aus dem Verdichtereinlass 9 dem Ringraum 10 zugeführt, so dass in beiden Räumen der gleiche Luftdruck herrscht. Dies hat zur Folge, dass sich die auf das Verdichterrad 3 wirkenden Axialkräfte gegenseitig aufheben. Entsprechend verringern sich die Lagerverluste im Bereich der Axiallager 15.

Da vorliegend die radial verlaufenden Luftkanäle 8 im Bereich des Nabenabschnitts 5 angeordnet sind, der in den hohlzylinderförmigen Wellenabschnitt 6 eingesetzt ist, weist der Wellenabschnitt 6 in Überdeckung mit den Luftkanälen 8 angeordnete Luftkanäle 11 auf.

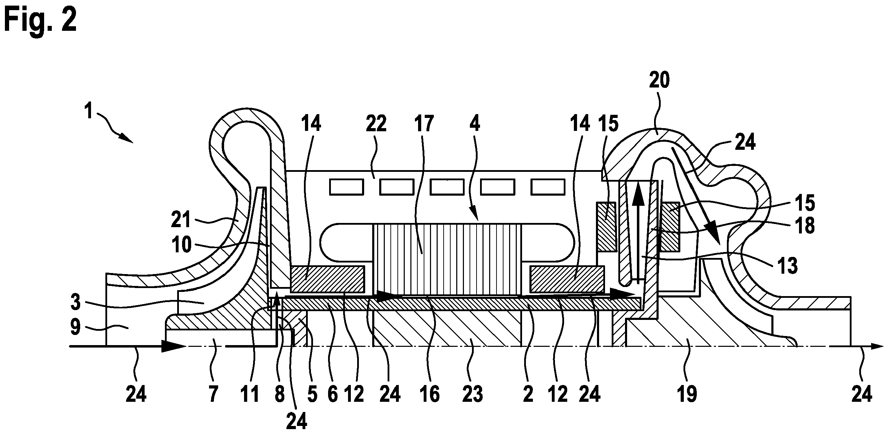

Wie ferner der Fig. 2 zu entnehmen ist, weist die dargestellte Strömungsmaschine 1 weitere Luftkanäle 12,13 auf. Die Luftkanäle 12,13 verbinden den Ringraum 10 mit mindestens einem Lager 14,15. Vorliegend führt mindestens ein axial verlaufender Luftkanal 12 vom Ringraum 10 über die Radiallager 14 von der Verdichterseite auf die Turbinenseite der Strömungsmaschine 1, so dass über die zugeführte Luft eine Kühlung der Radiallager 14 bewirkt wird. Der mindestens eine Luftkanal 12 ist dabei über einen Ringspalt 16 zwischen der Wicklung 17 und der Welle 2 geführt, so dass auch eine Kühlung des Elektromotors 4 erreicht wird. Am turbinenseitigen Ende der Welle 2 ist der mindestens eine Luftkanal 12 mit mindestens einem radial verlaufenden Luftkanal 13 verbunden, der sich durch die Axiallagerscheibe 18 von radial innen nach radial außen erstreckt. Somit wird nicht nur eine Kühlung der Axiallager 15 erreicht, sondern ferner eine Anhebung des Luftdrucks auf das Niveau vor dem Turbinenrad 19. Der über die Luftkanäle 7, 8, 12,13 führende Luftstrom 24 ist in der Fig. 2 durch Pfeile angedeutet.

## Patentansprüche

1. Strömungsmaschine (1) zur Luftversorgung eines Brennstoffzellensystems, umfassend mindestens ein mit einer Welle (2) drehfest verbundenes Verdichterrad (3) sowie einen Elektromotor (4) zum Antreiben der Welle (2), wobei das Verdichterrad (3) über einen Nabenabschnitt (5) mit einem vorzugsweise hohlzylinderförmigen Wellenabschnitt (6) der Welle (2) drehfest verbunden ist,wobei im Nabenabschnitt (5) mindestens ein Luftkanal (7, 8) ausgebildet ist, über den ein Verdichtereinlass (9) mit einem Ringraum (10) auf der dem Verdichtereinlass (9) abgewandten Seite des Verdichterrads (3) verbunden ist
**dadurch gekennzeichnet, dass** der Ringraum (10) auf der dem Verdichtereinlass (9) abgewandten Seite des Verdichterrads (3) über mindestens einen weiteren Luftkanal (12, 13) mit mindestens einem Lager (14,15) der Welle (2) verbunden ist, wobei der mindestens eine weitere Luftkanal (12) über einen Ringspalt (16) zwischen der Welle (2) und einer die Welle (2) umgebenden Wicklung (17) des Elektromotors (3) geführt ist.

2. Strömungsmaschine (1) nach Anspruch 1,
**dadurch gekennzeichnet, dass** der Nabenabschnitt (5) mindestens einen axial verlaufenden Luftkanal (7) aufweist.

3. Strömungsmaschine (1) nach Anspruch 1 oder 2,
**dadurch gekennzeichnet, dass** der Nabenabschnitt (5) mindestens einen im Wesentlichen radial verlaufenden Luftkanal (8) aufweist.

4. Strömungsmaschine (1) nach einem der vorhergehenden Ansprüche, **dadurch gekennzeichnet, dass** der Nabenabschnitt (5) zumindest abschnittsweise in den hohlzylinderförmigen Wellenabschnitt (6) eingesetzt, insbesondere eingepresst ist.

5. Strömungsmaschine (1) nach Anspruch 3 oder 4,
**dadurch gekennzeichnet, dass** der hohlzylinderförmige Wellenabschnitt (6) mindestens einen im Wesentlichen radial verlaufenden Luftkanal (11) aufweist, der in Überdeckung mit dem mindestens einen radial verlaufenden Luftkanal (8) des Nabenabschnitts (5) angeordnet ist.

6. Strömungsmaschine (1) nach einem der vorhergehenden Ansprüche, **dadurch gekennzeichnet, dass** das mindestens eine Lager (14, 15) als Folienluftlager ausgeführt ist.

7. Strömungsmaschine (1) nach einem der vorhergehenden Ansprüche,
**dadurch gekennzeichnet, dass** der mindestens eine weitere Luftkanal (13) durch eine drehfest mit der Welle (2) verbundene, innenbelüftete Axiallagerscheibe (18) zur Lagerung eines Turbinenrads (19) geführt ist.

8. Strömungsmaschine (1) nach einem der vorhergehenden Ansprüche,
**dadurch gekennzeichnet, dass** die Luftkanäle (7, 8, 12,13) zur Verbindung des Verdichtereinlasses (9) mit gekühlter oder ungekühlter Umgebungsluft beaufschlagbar sind.

9. Verfahren zum Betreiben einer Strömungsmaschine (1) nach einem der vorhergehenden Ansprüche,
**dadurch gekennzeichnet, dass** die Luftkanäle (7, 8, 12,13) mit gekühlter oder ungekühlter Umgebungsluft beaufschlagt werden.

10. Verfahren nach Anspruch 9,
**dadurch gekennzeichnet, dass** mit Hilfe einer innenbelüfteten Axiallagerscheibe (18), durch die mindestens ein Luftkanal (13) geführt ist, der Kühlluftdruck angehoben wird.

## Claims

1. Turbomachine (1) for supplying air to a fuel cell system, comprising at least one compressor wheel (3) connected to a shaft (2) for conjoint rotation therewith, and an electric motor (4) for driving the shaft (2), wherein the compressor wheel (3) is connected via a hub portion (5) to a preferably hollow-cylinder-shaped shaft portion (6) of the shaft (2) for conjoint rotation therewith, wherein at least one air channel (7, 8) is formed in the hub portion (5), by means of which air channel a compressor inlet (9) is connected to an annular space (10) on the side of the compressor wheel (3) facing away from the compressor inlet (9),
**characterized in that** the annular space (10) is connected to at least one bearing (14, 15) of the shaft (2) on the side of the compressor wheel (3) facing away from the compressor inlet (9) via at least one further air channel (12, 13), wherein the at least one further air channel (12) is routed via an annular gap (16) between the shaft (2) and a winding (17), surrounding the shaft (2), of the electric motor (3).

2. Turbomachine (1) according to Claim 1,
**characterized in that** the hub portion (5) has at least one axially running air channel (7).

3. Turbomachine (1) according to Claim 1 or 2,
**characterized in that** the hub portion (5) has at least one substantially radially running air channel (8).

4. Turbomachine (1) according to any of the preceding claims, **characterized in that** the hub portion (5) is inserted, in particular pressed, at least in some sections into the hollow-cylinder-shaped shaft portion (6).

5. Turbomachine (1) according to Claim 3 or 4,
**characterized in that** the hollow-cylinder-shaped shaft portion (6) has at least one substantially radially running air channel (11), which is arranged in overlap with the at least one radially running air channel (8) of the hub portion (5).

6. Turbomachine (1) according to any of the preceding claims, **characterized in that** the at least one bearing (14, 15) is designed as a foil air bearing.

7. Turbomachine (1) according to any of the preceding claims,
**characterized in that** the at least one further air channel (13) is routed through an internally ventilated axial bearing disc (18), which is connected to the shaft (2) for conjoint rotation therewith, for supporting a turbine wheel (19).

8. Turbomachine (1) according to any of the preceding claims,
**characterized in that** the air channels (7, 8, 12, 13) for the connection of the compressor inlet (9) can be supplied with cooled or uncooled ambient air.

9. Method for operating a turbomachine (1) according to any of the preceding claims,
**characterized in that** the air channels (7, 8, 12, 13) are supplied with cooled or uncooled ambient air.

10. Method according to Claim 9,
**characterized in that** the cooling air pressure is raised with the aid of an internally ventilated axial bearing disc (18), through which at least one air channel (13) is routed.

## Revendications

1. Machine à flux (1) pour l'alimentation en air d'un système de piles à combustible, comprenant au moins une roue de compresseur (3) reliée de manière solidaire en rotation à un arbre (2) ainsi qu'un moteur électrique (4) pour l'entraînement de l'arbre (2), la roue de compresseur (3) étant reliée de manière solidaire en rotation, par une section de moyeu (5), à une section d'arbre (6) de l'arbre (2), de préférence de forme cylindrique creuse, au moins un canal d'air (7, 8) étant formé dans la section de moyeu (5), par lequel une entrée de compresseur (9) est reliée à un espace annulaire (10) sur le côté de la roue de compresseur (3) opposé à l'entrée de compresseur (9),
**caractérisé en ce que** l'espace annulaire (10) sur le côté de la roue de compresseur (3) opposé à l'entrée de compresseur (9) est relié à au moins un palier (14, 15) de l'arbre (2) par au moins un autre canal d'air (12, 13), ledit au moins un autre canal d'air (12) étant guidé par un interstice annulaire (16) entre l'arbre (2) et un enroulement (17) du moteur électrique (3) entourant l'arbre (2).

2. Machine à flux (1) selon la revendication 1,
**caractérisée en ce que** la section de moyeu (5) présente au moins un canal d'air (7) s'étendant axialement.

3. Machine à flux (1) selon la revendication 1 ou la revendication 2,
**caractérisée en ce que** la section de moyeu (5) présente au moins un canal d'air (8) s'étendant essentiellement radialement.

4. Machine à flux (1) selon l'une des revendications précédentes, **caractérisée en ce que** la section de moyeu (5) est insérée, en particulier enfoncée, au moins par sections dans la section d'arbre (6) en forme de cylindre creux.

5. Machine à flux (1) selon la revendication 3 ou la revendication 4,
**caractérisée en ce que** la section d'arbre (6) en forme de cylindre creux présente au moins un canal d'air (11) s'étendant sensiblement radialement, qui est agencée en recouvrement avec ledit au moins un canal d'air (8) s'étendant radialement de la section de moyeu (5).

6. Machine à flux (1) selon l'une des revendications précédentes, **caractérisée en ce que** ledit au moins un palier (14, 15) est réalisé sous forme de palier à air en feuille.

7. Machine à flux (1) selon l'une des revendications précédentes,
**caractérisée en ce que** ledit au moins un autre canal d'air (13) est guidé à travers un disque de palier axial (18) à ventilation interne, solidaire en rotation de l'arbre (2), pour supporter une roue de turbine (19).

8. Machine à flux (1) selon l'une des revendications précédentes,
**caractérisée en ce que** les conduits d'air (7, 8, 12, 13) destinés à relier l'entrée du compresseur (9) sont aptes à être alimentés en air ambiant refroidi ou non.

9. Procédé de fonctionnement d'une turbomachine (1) selon l'une des revendications précédentes,
**caractérisé en ce que** les conduits d'air (7, 8, 12, 13) sont alimentés en air ambiant refroidi ou non refroidi.

10. Procédé selon la revendication 9,
**caractérisé en ce que** la pression de l'air de refroidissement est augmentée à l'aide d'un disque de palier axial (18) ventilé intérieurement, à travers lequel est guidé au moins un canal d'air (13).
